# EUROPÄISCHE PATENTSCHRIFT

(11) **EP 0 373 476 B1**
(45) Veröffentlichungstag und Bekanntmachung des Hinweises auf die Patenterteilung: **04.08.1993**
(21) Anmeldenummer: 89122361.2
(22) Anmeldetag: 05.12.1989
(51) Int. Cl.: H02G 15/18, H02G 15/10

(54) **Längsgeteilte Kabelmuffe mit flexibler Umhüllung und Halbzeug zur Herstellung einer solchen Kabelmuffe**
Longitudinally divided cable sleeve comprising a flexible envelope, and semi-finished product for manufacturing such a cable sleeve
Manchon de câble divisé longitudinalement comprenant une enveloppe flexible et produit semi-fini pour la fabrication d'un tel manchon de câble

(30) Priorität: 16.12.1988 DE 3842520
(43) Veröffentlichungstag der Anmeldung: 20.06.1990
(73) Patentinhaber: RXS Schrumpftechnik-Garnituren GmbH, D-58093 Hagen (DE)
(72) Erfinder: Schilling, Werner, Dipl.-Ing., D-8632 Neustadt (DE)
(74) Vertreter: Fuchs, Franz-Josef, Dr.-Ing.

(56) Entgegenhaltungen:
- EP-A- 0 057 582
- EP-A- 0 058 054
- EP-A- 0 226 940
- EP-A- 0 249 972
- DE-A- 2 011 297

## Beschreibung

Längsgeteilte Kabelmuffe mit flexibler Umhüllung und Halbzeug zur Herstellung einer solchen Kabelmuffe.

Die Erfindung betrifft eine längsgeteilte Kabelmuffe aus einer Umhüllung mit einem Längsverschluß und stirnseitigen Dichtungsbereichen, sowie Halbzeug zur Herstellung einer solchen Kabelmuffe.

Kabelmuffen dieser Art sind vielfältig bekannt, wobei Kabelmuffen aus Kunststoff und verstärkende Einlagen meist eine starre Form aufweisen, wie sie beispielsweise in der DE-OS 2 011 297 beschrieben werden. Dort handelt es sich um zwei starre Halbschalen aus Kunststoff, die sowohl Verstärkungs- als auch Metalleinlagen aufweisen. Diese Kabelmuffe hat aufgrund ihrer starren Gestaltung von zwei Halbschalen zwei Längsschlitze und damit auch zwei Längsabdichtungen. Nie bereits erwähnt, ist die Ausführung dieser Halbschalen recht stabil, das heißt sie sind deshalb auch relativ schwer und durch die Starrheit ergeben sich auch bei der Montage gewisse Unannehmlichkeiten. Diese Halbschalen sind weiterhin mit Glasfasern verstärkt und geben zusätzliche Verstärkung und Erhöhung durch ihre Einlagerung in dem ausgehärteten Harz, damit auch die Steifigkeit. Außerdem ist eine Metallschicht eingearbeitet, die allerdings nur als Permeationssperre dient.

Für vorliegende Erfindung ergibt sich nun die Aufgabe, eine flexible Umhüllung für eine Kabelmuffe zu gestalten, bei der das Gewicht bei ausreichend guter mechanischer Festigkeit reduziert ist, wobei gleichzeitig eine Flexibilität erreicht werden soll, die zur Erleichterung der Montage beiträgt und universell einsetzbar ist. Die gestellte Aufgabe wird durch eine Kabelmuffe der eingangs erläuterten Art dadurch gelöst, daß sie zumindest in Teilbereichen Stützkörper aufweist und daß die auf die Stützkörper aufzubringende Umhüllung als flexible Folie, bestehend aus aneinander haftenden Kunststoff- und Verstärkungsschichten, sowie zumindest einer Metallfolie, ausgebildet ist.

Weiterhin besteht die Aufgabe, ein Halbzeug für eine solche flexible Kabelmuffe zu schaffen. Diese Aufgabe wird mit einem Halbzeug gelöst, das den Merkmalen der Patentansprüche 19 bis 26 entspricht.

Bei bisherigen konventionell gebauten Kabelmuffen sind die beiden Funktionen "Stützen - Tragen" und "schützende Umhüllung" in dem starren Muffenkörper vereinigt. Dies führt zu den oben genannten Nachteilen. Bei der Kabelmuffe gemäß der Erfindung sind diese Funktionen getrennt, das heißt über ein mechanisch steifes Gerippe bzw. einen oder mehrere Stützkörper wird die flexible Umhüllung aus verschiedenen Materialschichten geformt und mit entsprechenden Verschlußelementen zur Kabelmuffe gestaltet. Vorzugsweise besteht die flexible Umhüllung, das heißt das Halbzeug zur Herstellung einer Kabelmuffe gemäß der Erfindung aus mehreren Schichten von Kunststoffen wie zum Beispiel Polyethylen und einer Metallfolie, vorzugsweise aus Stahl, wobei letztere korrosionssicher allseitig mit einer Kunststoffbeschichtung aus einem Copolymer umschlossen ist. Außerdem sind als Verstärkungsschicht Einzelelemente längsverlaufend in Kreuzgitterform oder als Gewebe, vorzugsweise aus Glasfasern eingelagert. Bei einem solchen Aufbau, der später näher erläutert wird, ist eine hohe Dehn- und Durchdringfestigkeit gegeben, wobei trotzdem noch eine ausgezeichnete Flexibilität vorhanden ist. So kann ein derartiges als Halbzeug gefertigtes Flächengebilde in vielfältiger Form eingesetzt werden. So wird beispielsweise das flexible Halbzeug in Form der Folie über ein mechanisch steifes Gerippe bzw. über entsprechende Stützkörper aufgezogen und mit geeigneten Mechanismen verschlossen. Das aussteifende Gerippe bzw. die Stützkörper werden zweckmäßigerweise im Extrusionsverfahren aus einem Kunststoff hergestellt, wobei diese Profile dann für den entsprechenden Einsatzfall auf die erforderliche Breite abgeschnitten werden. Das oben beschriebene Halbzeug wird dann mit den entsprechenden Stützkörpern zur Muffe konfektioniert. Anders als bei konventionellen, mechanisch steifen Muffen, bei denen praktisch pro Typ einer Produktfamilie ein spezialisiertes Werkzeug benötigt wird, werden die neuen Muffen in großer Variabilität aus den nahezu gleichen Ausgangskomponenten konfektioniert. Die flexible Folie selbst wird aus den bereits genannten Schichten bzw. Folien zu einem Halbzeug gepreßt bzw. laminiert und kann zum Beispiel als Meterware für den jeweiligen Anwendungsfall zurechtgeschnitten werden. Die Umhüllung kann jedoch auch als Formatware hergestellt werden, wobei dann von Vorteil ist, daß alle Kanten der Metallfolie korrosionsgeschützt sind. Insgesamt ist dieses gefertigte Halbzeug nur ca. 1 mm stark, so daß hohe Flexibilität und geringes Gewicht gewährleistet sind.

Im folgenden wird als Ausführungsbeispiel eine Kabelmuffenform beschrieben, die aus einem vorgefertigten Folienteil der beschriebenen Art besteht, wobei die Längsränder mit Verschlußelementen versehen sind.

Die Erfindung wird anhand von sechs Figuren näher erläutert.
- Figur 1: zeigt die montierte Kabelmuffe gemäß der Erfindung.
- Figur 2: zeigt die zur Kabelmuffe konfektionierte Folie.
- Figur 3: zeigt einen ersten Schichtenaufbau der Folie.
- Figur 4: zeigt einen zweiten Schichtenaufbau der Folie.
- Figur 5: zeigt einen dritten Schichtenaufbau der Folie.
- Figur 6: zeigt einen vierten Schichtenaufbau dar Folie.

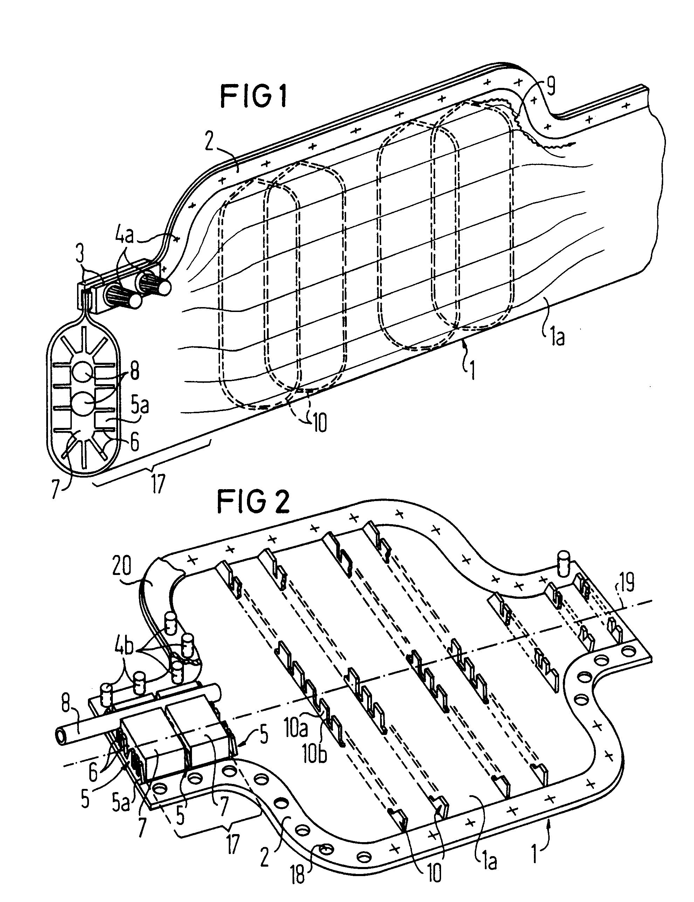

Die Figur 1 verdeutlicht als komplett montierte Kabelmuffe 1 das Zusammenwirken der einzelnen Muffenteilbereiche. So wird die Umhüllung 1a um den Kabelspleiß herumgelegt und wenn nötig auf die eingelegten Stützkörper 10, die zum Beispiel als Stützleisten ausgebildet sind, aufgezogen und an den Längsrändern 2 mit Verschlußelementen 4a verschlossen. Die Verschlußelemente werden in diesem Ausführungsbeispiel an einem Längsrand als Schraubbolzen 46, vorzugsweise aus Kunststoff wie Polyethylen, ausgebildet, während der zweite Längsrand Löcher 18 aufweist. Nach dem Zusammenfügen werden die Längsbereiche dann mit entsprechenden Muttern 4a zusammengeklemmt. Je nach Erfordernis können zur gleichmäßigen Druckverteilung im Verschlußbereich auch Druckleisten 3 eingefügt werden, wobei diese Maßnahme besonders in den stirnseitigen Einführungsbereichen der Kabelmuffe vorteilhaft ist. Der stirnseitige Kabeleinführungsbereich 17 besteht jeweils aus plastischer Dichtungsmasse 7, die in dichtungskammerähnlichen Aufnahmen eingelegt ist und die, wie hier sichtbar, nach einwärts über die Stützleisten 5 der Aufnahmen so übersteht, daß eingeführte Kabel 8 nach dem Umformen dichtend umpreßt werden. Vor den eigentlichen Aufnahmen für das plastische Dichtungsmaterial 7 ist hier nur eine aus einzelnen Segmenten 5a gebildete Stützleiste 5 zu sehen. Die einzelnen Segmente 5a sind durch entsprechend ausgeformte Ausschnitte 6 so unterteilt, daß sich beim Zusammenfügen der Umhüllung 1a zum Beispiel die aufgezeigte ovale Endform als Einführungsbereich 17 ergibt. Je nach Formgebung der Segmente 5a und der dazwischenliegenden Ausschnitte 6 ergeben sich verschiedene Endformen als Einführungsbereich. Im übrigen schmiegt sich die Umhüllung 1a der darunter liegenden Spleißform an, wie die Konturlinie 9 zum Ausdruck bringen soll. Weiterhin ist angedeutet, daß im Inneren der Kabelmuffe mehrere Stützkörper 10 ringförmig angeordnet sind und auf diese Weise die Umhüllung 1a abstützen.

Die Figur 2 zeigt die Kabelmuffe 1 nach Figur 1 im offenen Zustand. Hierbei werden die Einführungsbereiche 17 deutlich, die in diesem Fall in Achsrichtung gesehen aus zwei hintereinander liegenden Aufnahmen für Dichtungsmaterial 7 bestehen. Diese Aufnahmen werden durch quer und symmetrisch zur Achse 19 verlaufende Stützleisten 5 - in diesem Fall drei Stück - seitlich begrenzt. Diese Stützleisten 5 werden aus leistenförmigen Profilen gebildet, wobei diese mit Ausschnitten 6 versehen werden, so daß die Stützleisten 5 eigentlich nurmehr aus Segmenten 5a bestehen, wobei die Gestaltung durch die verschiedenen Ausschnitte bestimmt ist. Diese Ausschnitte 6 bestimmen letztlich die Form des Einführungsbereiches beim Zusammenfügen, wie vorher bereits beschrieben wurde. Außerdem ist erkennbar, daß die Einlage aus Dichtungsmaterial 7 stärker ist als die Höhe der seitlichen Stützleisten 5 bzw. deren Segmente 5a, so daß genügend Dichtungsmaterial 7 zum dichten Umformen der eingeführten Kabel 8 vorhanden ist. Beim Zusammenfügen der Umhüllung 1a und durch die Druckerzeugung beim Schließen mit den Verschlußelementen 4a und 4b erfolgt die erforderliche Abdichtung. Außerdem ist angedeutet, daß die Verschlußbereiche 2 entlang der Längsränder mit einem Dichtungsband 20 belegt werden können, um die Dichtwirkung zu erhöhen. Im Mittelbereich der Kabelmuffe 1 sind nun wiederum die Stützkörper erkennbar, die hier als Stützleisten 10 ausgebildet sind und mit Einschnitten 10b versehen sind, so daß diese Stützkörper 10 ebenfalls aus mehr oder weniger breit eingeschnittenen Segmenten 10a besteht. Diese Ausführungsform begünstigt die Flexibilität der Kabelmuffe 1 und ermöglicht, daß die Umhüllung 1a bereits als fertigkonfektioniertes Bauteil für eine Kabelmuffe ausgebildet ist. Diese Stützleisten 10 können über die gesamte Breite oder auch nur in Teilbereichen mit der Umhüllung 1a fest verbunden sein, so daß sich auch hier weitgehend Anpassungen duchführen lassen. Im Prinzip sind jedoch auch separate Stützkörper verwendbar, die dann zweckmäßigerweise am zu umhüllenden Gegenstand, wie zum Beispiel einem Kabelspleiß, befestigt werden. Ergänzend sei darauf verwiesen, daß die Ausbildung der Ausschnitte der Stützleisten 5 in den Einführungsbereichen wie bei den eigentlichen Stützkörpern im Innenbereich der Kabelmuffe nur angedeutet sind und je nach erwünschter Außenform der Kabelmuffe gestaltet werden können. So ergibt sich beispielsweise in den stirnseitigen Einfügungsbereichen der Kabelmuffe eine kreisförmige Außenform, wenn alle Ausschnitte 6 in gleicher Dreiecksform über die ganze Länge der Stützleiste 5 hinweg ausgeführt werden.

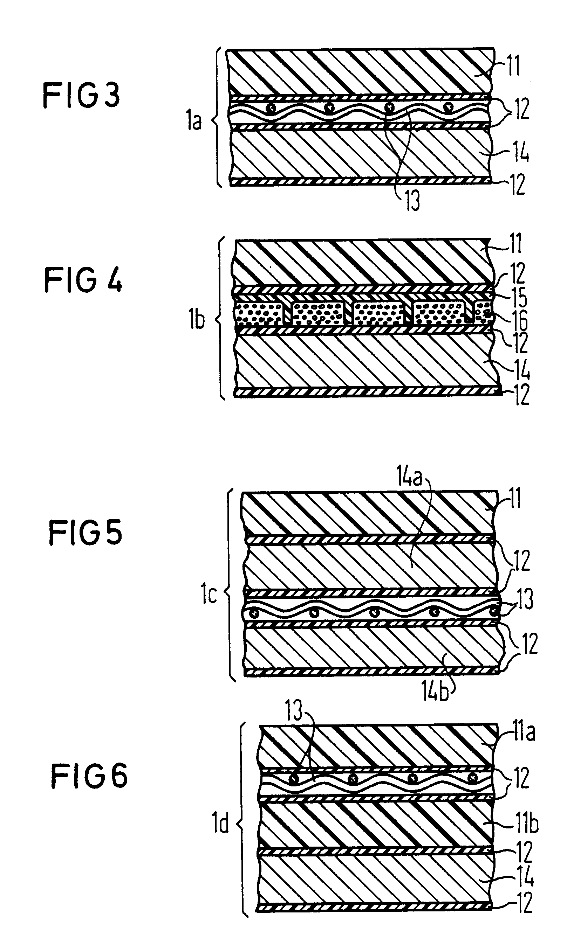

Anhand der folgenden Figuren 3 bis 6 werden nun einige Beispiele für den erfindungsgemäßen Aufbau einer als Halbzeug für Umhüllungen verwendbaren, flexiblen Folie beschrieben, wobei die Aufeinanderfolge und Anzahl der einzelnen Folienschichten in beliebiger Weise variiert werden können, ohne daß das Grundprinzip verändert wird.

So zeigt die Figur 3, daß die Folie 1a aus einer Deckschicht 11 aus Polyethylen mit einer nach innen weisenden Haftschicht 12 aus einem Copolymer, einer darunter folgenden Verstärkungsschicht 13 aus vorzugsweise in Kreuz- oder Geflechtform angeordneten Glasfasern und einer allseits mit einer Haftschicht 12 aus einem Copolymer umgebenen Metallfolie 14, vorzugsweise aus Stahl, besteht. Für die jeweilige Stärke der einzelnen Schichten sind folgende Werte unter Zugrundelegung der erforderlichen Eigenschaften besondes geeignet:

| | |
|---|---|
| Deckschicht aus Kunststoff, vorzugsweise Polyethylen: | ≦ 200 µm, vorzugsweise 150 µm |
| Haftschichten aus einem Copolymer, vorzugsweise Polyethylenacrylsäureester | ≦ 50 µm, vorzugsweise ≦ 30 µm |
| Verstärkerschicht, vorzugsweise aus Glasfasern: | ≦ 150 µm, vorzugsweise 120 µm |
| Metallfolie, vorzugsweise aus Stahl: | ≦ 200 µm, vorzugsweise 150 µm |

Diese Werte gelten für alle angegebenen Ausführungsbeispiele.

Die Figur 4 zeigt ein zweites Ausführungsbeispiel für eine flexible Folie 1b, bei der die Verstärkungsschicht durch ein Hohlraumprofil 15 mit einer Stärke von ca. 300 µm gebildet wird. Die einzelnen Hohlkammern dieses Hohlkammerprofils 15 sind mit einem Dichtungsmaterial, vorzugsweise einer Bitumendichtmasse ausgefüllt. Diese Ausführungsform hat den Vorteil, daß bei einer Stich- oder Schnittverletzung der als Umhüllung eingesetzten Folie 1b eine gewisse "Selbstheilung" eintritt, da das Dichtungsmaterial die Verletzung dichtend ausfüllt und abschließt. Im übrigen sind die bereits beschriebenen Schichten vorgesehen.

In Figur 5 wird neben den bereits in Figur 1 beschriebenen Schichten eine weitere Metallfolie 14a, vorzugsweise ebenfalls aus Stahl, unterhalb der mit dem Copolymer beschichteten Deckfolie 11 eingebracht. Durch diese beiden eingelagerten Metallschichten 14a und 14b wird somit die mechanische Festigkeit erhöht, wobei die Flexibilität weitgehend erhalten bleibt.

In Figur 6 wird zusätzlich zu den in Figur 1 bereits beschriebenen Schichten eine weitere Kunststoffschicht 11b, vorzugsweise aus Polyethylen, zwischen der Verstärkungsschicht 13 und der Copolymerschicht 12 der Metallfolie 14 eingelagert.

Im übrigen kann die Aufeinanderfolge der einzelnen Schichten wie auch das Material der einzelnen Schichten entsprechend den Erfordernissen abgeändert werden. Die in den Figuren 3 bis 6 beschriebenen flexiblen Folien können in einfacher und durchaus üblicher Verfahrensweise als Halbzeug für Kabelmuffen hergestellt werden, die dann durch entsprechende Konfektionierung in der bereits oben erläuterten Weise zur Kabelmuffe gestaltet werden.

## Patentansprüche

1. Längsgeteilte Kabelmuffe (1) aus einer Umhüllung (1a) mit einem Längsverschluß und stirnseitigen Dichtungsbereichen,
**dadurch gekennzeichnet,**
daß sie zumindest in Teilbereichen Stützkörper (5, 10) aufweist und daß die auf die Stützkörper (5, 10) aufzubringende Umhüllung (1a) als flexible Folie, bestehend aus aneinanderhaftenden Kunststoffschichten (11, 11a, 11b) und Verstärkungsschichten (13) sowie zumindest einer Metallfolie (14, 14a, 14b), ausgebildet ist.

2. Längsgeteilte Kabelmuffe nach Anspruch 1,
**dadurch gekennzeichnet,**
daß die Umhüllung (1a) aus einem symmetrisch zu einer Längsachse (19) ausgebildeten Flächenformteil besteht.

3. Längsgeteilte Kabelmuffe nach Anspruch 1,
**dadurch gekennzeichnet,**
daß die Umhüllung aus einer als Meterware gefertigten Flächenfolie symmetrisch zu einer Längsachse (19) ausgeschnitten ist.

4. Längsgeteilte Kabelmuffe nach einem der vorhergehnden Ansprüche,
**dadurch gekennzeichnet,**
daß die Umhüllung (1a) in den stirnseitigen Einführungsbereichen (17) Aufnahmen (5-5) für plastisches Dichtungsmaterial (7), vorzugsweise aus Bitumendichtmasse, aufweist.

5. Längsgeteilte Kabelmuffe nach Anspruch 4,
**dadurch gekennzeichnet,**
daß die Aufnahmen (5-5) aus mindestens zwei quer zur Einführungsrichtung verlaufenden Stützleisten (5) bestehen, wobei die Stützleisten (5) Ausschnitte (6) aufweisen, die so angelegt sind, daß eine Formung der Umhüllung (1a) zu einem rohrförmigen Einführungsbereich (17) möglich ist.

6. Längsgeteilte Kabelmuffe nach einem der vorhergehenden Ansprüche,
**dadurch gekennzeichnet,**
daß das in die Aufnahmen (5-5) eingelegte Dichtungsmaterial (7) stärker ist als die Höhe der Stützleisten (5a).

7. Längsgeteilte Kabelmuffe nach einem der vorhergehenden Ansprüche,
**dadurch gekennzeichnet,**
daß Verschlußelemente (4a, 4b, 12) entlang der Längsränder (2) angeordnet sind.

8. Längsgeteilte Kabelmuffe nach Anspruch 7,
**dadurch gekennzeichnet,**
daß die Verschlußelemente des einen Längsrandes als vorzugsweise angeformten Schraubbolzen (4b), vorzugsweise aus Kunststoff wie Polyethylen, und die Verschlußelemente des zweiten Längsrandes als korrespondierende Löcher (18) ausgebildet sind, wobei auf die Schaubbolzen (4b) im geschlossenen Zustand der Muffe (1) Muttern (4a), vorzugsweise Rändelmuttern aus Kunststoff wie Polyethylen, aufsetzbar sind.

9. Längsgeteilte Kabelmuffe nach einem der vorhergehenden Ansprüche,
**dadurch gekennzeichnet,**
daß die Stützkörper (10) im Innenbereich der Kabelmuffe (1) als selbständige, ringförmige Bauteile, vorzugsweise aus Kunststoff wie Polyethylen, ausgebildet sind.

10. Längsgeteilte Kabelmuffe nach einem der Ansprüche 1 bis 8,
**dadurch gekennzeichnet,**
daß die Stützkörper (10) als Formleisten mit Ausschnitten (10b), ähnlich der Art der Stützleisten (5) in den Einführungsbereichen (17) ausgebildet sind und auf der nach innen zeigenden Seite der Umhüllung (1a) eingelegt und vorzugsweise zumindest bereichsweise an der Umhüllung (1a) fixiert sind.

11. Längsgeteilte Kabelmuffe nach einem der vorhergehenden Ansprüche,
**dadurch gekennzeichnet,**
daß in den längsseitigen Dichtungsbereichen (2) entlang der Längsränder ein Dichtungsstreifen (20), vorzugsweise aus plastischem Material aus vorzugsweise Bitumendichtmasse, angeordnet ist.

12. Längsgeteilte Kabelmuffe nach einem der vorhergehenden Ansprüche,
**dadurch gekennzeichnet,**
daß auf den Außenseiten des längs verlaufenden Dichtungsbereiches (2) zumindest in den Einführungsbereichen (17) Stützstege (3) angeordnet sind, die vorzugsweise aus Kunststoff wie Polyethylen bestehen.

13. Längsgeteilte Kabelmuffe nach einem der vorhergehenden Ansprüche,
**dadurch gekennzeichnet,**
daß die Stützkörper (5, 10) aus Kunststoffprofilen, vorzugsweise aus Polyethylen hergestellt sind.

14. Längsgeteilte Kabelmuffe nach Anspruch 13,
**dadurch gekennzeichnet,**
daß die Stützkörper (10) als Stützleisten ausgebildet sind.

15. Längsgeteilte Kabelmuffe nach Anspruch 14,
**dadurch gekennzeichnet,**
daß die Stützkörper (10) durch Einschnitte (10b) in einzelne Segmente (10a) unterteilt sind.

16. Längsgeteilte Kabelmuffe nach einem der Ansprüche 13 bis 15,
**dadurch gekennzeichnet,**
daß die Stützkörper (5, 10) als separate Bauteile eingefügt sind.

17. Längsgeteilte Kabelmuffe nach einem der Ansprüche 13 bis 15,
**dadurch gekennzeichnet,**
daß die Stützkörper (5, 10) bereichsweise mit der Umhüllung (1a) verbunden sind.

18. Längsgeteilte Kabelmuffe nach einem der Ansprüche 13 bis 15,
**dadurch gekennzeichnet,**
daß die Stützkörper (5,10) jeweils in der ganzen Länge mit der Umhüllung (1a) verbunden sind.

19. Halbzeug zur Herstellung einer Kabelmuffe (1) mit einer flexiblen Folie als Umhüllung, nach einem der vorhergehenden Ansprüche,
**dadurch gekennzeichnet,**
daß die Folie (1a) besteht aus:
a. einer Deckschicht (11) aus polymerem Kunststoff, vorzugsweise aus Polyethylen
b. einer darunter liegenden Haftschicht (12) aus einem Copolymer, vorzugsweise Polyethylenacrylsäureester
c. einer Verstärkungsschicht (13), vorzugsweise aus Glasfasern
d. einer darauf aufgebrachten, beiderseits mit einem Copolymer (12) vorzugsweise Polyethylenacrylsäureester beschichteten Metallfolie (14), vorzugsweise aus Stahl.

20. Halbzeug zur Herstellung einer Kabelmuffe (1) mit einer flexiblen Folie als Umhüllung nach einem der Ansprüche 1 bis 8,
**dadurch gekennzeichnet,**
daß die Folie (1b) besteht aus:
a. einer Deckschicht (11) aus polymerem Kunststoff, vorzugsweise Polyethylen
b. einer darunter liegenden Haftschicht (12) aus einem Copolymer, vorzugsweise Polyethylenacrylsäureester
c. einer Kunststoffolie, vorzugsweise aus Polyethylen, die ein flächenhaftes Hohlkammerprofil (15) aufweist, wobei die Hohlkammern mit einem plastischen Dichtungsmaterial (16), vorzugsweise aus Bitumendichtmasse, gefüllt sind.
d. einer darauf aufgebrachten, beidseitig mit einem Copolymer (12), vorzugsweise Polyethylenacrylsäureester, beschichteten Metallfolie (14), vorzugsweise aus Stahl.

21. Halbzeug nach einem der Ansprüche 1 bis 18,
**dadurch gekennzeichnet,**
daß die Folie (1c) besteht aus:
a. einer Deckfolie (11) aus polymerem Kunststoff, vorzugsweise Polyethylen
b. einer darunter angeordneten, beidseitig mit einem Copolymer (12), vorzugsweise Polyethylenacrylsäureester, beschichteten ersten Metallfolie (14a), vorzugsweise aus Stahl
c. einer Verstärkungsschicht (13), vorzugsweise aus Glasfasern
d. einer weiteren beidseitig mit Copolymer (12), vorzugsweise Polyethylenacrylsäureester beschichteten zweiten Metallfolie (14b), vorzugsweise aus Stahl

22. Halbzeug zur Herstellung einer Kabelmuffe (1) mit einer flexiblen Folie als Umhüllung nach einem der vorhergehenden Ansprüche 1 bis 18,
**dadurch gekennzeichnet,**
daß die Folie (1d) besteht aus:
a. einer Deckschicht (11a) aus einem polymeren Kunststoff, vorzugsweise Polyethylen
b. einer darunter liegenden Haftschicht (12) aus einem Copolymer, vorzugsweise Polyethylenacrylsäureester
c. einer Verstärkungsschicht (13), vorzugsweise aus Glasfasern
d. einer zweiten Haftschicht (12) aus einem Copolymer, vorzugsweise aus Polyethylenacrylsäureester
e. einer weiteren Kunststoffschicht (11b), vorzugsweise aus Polyethylen
f. einer abschließenden, beidseitig mit Copolymer (12), vorzugsweise aus Polyethylenacrylsäureester, beschichteten Metallfolie (14), vorzugsweise aus Stahl.

23. Halbzeug nach einem der Ansprüche 19 bis 22,
**dadurch gekennzeichnet,**
daß die Verstärkungsschicht (13) aus längsverlaufenden Verstärkungselementen, vorzugsweise Glasfasern, besteht.

24. Halbzeug nach einem der Ansprüche 19 bis 22,
**dadurch gekennzeichnet,**
daß die Verstärkungsschicht (13) aus längs- und querverlaufenden in Gitterform angeordneten Verstärkungselementen, vorzugsweise Glasfasern, besteht.

25. Halbzeug nach einem der Ansprüche 19 bis 22,
**dadurch gekennzeichnet,**
daß die Verstärkungsschicht (13) aus einem Gewebe, vorzugsweise aus Glasfasern, besteht.

26. Halbzeug nach einem der Ansprüche 19 bis 22,
**dadurch gekennzeichnet,**
daß die einzelnen Schichten der Folie (1a, 1b, 1c, 1d) jeweils folgende Stärken aufweisen:
| | |
|---|---|
| Deckschicht (11) aus Kunststoff | ≦ 200 µm, vorzugsweise 150 µm |
| Copolymerschicht (12) jeweils | ≦ 50 µm, vorzugsweise 30 µm |
| Metallfolien (14, 14a, 14b) | ≦ 200 µm, vorzugsweise 150 µm |
| Verstärkungsschicht (13) | ≦ 150 µm, vorzugsweise 120 µm |
| Schicht als Hohlkammerprofil (15) | ≦ 300 µm, vorzugsweise 300 µm. |

## Claims

1. Longitudinally divided cable sleeve (1) comprising an envelope (1a) having a longitudinal closure and end-face sealing regions, characterised in that the cable sleeve has supporting members (5, 10) at least in part-regions and in that the envelope (1a) to be applied to the supporting members (5, 10) is fashioned as a flexible sheet composed of plastic layers (11, 11a, 11b) and reinforcing layers (13) which adhere to one another and at least one metal foil (14, 14a, 14b).

2. Longitudinally divided cable sleeve according to Claim 1, characterised in that the envelope (1a) is composed of a planar-shaped part which is fashioned symmetrically relative to a longitudinal axis (19).

3. Longitudinally divided cable sleeve according to Claim 1, characterised in that the envelope is cut out of a planar sheet fabricated as linear goods, symmetrically relative to a longitudinal axis (19).

4. Longitudinally divided cable sleeve according to one of the preceding claims, characterised in that the envelope (1a) has in the end-face introduction regions (17) receptacles (5-5) for a plastic sealing material (7), preferably comprising a bituminous sealing compound.

5. Longitudinally divided cable sleeve according to Claim 4, characterised in that the receptacles (5-5) consist of at least two supporting strips (5) which extend transversely to the introduction direction, the supporting strips (5) having cut-outs (6) which are disposed so that the envelope (1a) can be shaped to form a tubular introduction region (17).

6. Longitudinally divided cable sleeve according to one of the preceding claims, characterised in that the sealing material (7) introduced into the receptacles (5-5) is thicker than the height of the supporting strips (5a).

7. Longitudinally divided cable sleeve according to one of the preceding claims, characterised in that closure elements (4a, 4b, 12) are arranged along the longitudinal edges (2).

8. Longitudinally divided cable sleeve according to Claim 7, characterised in that the closure elements on one longitudinal edge are fashioned as threaded bolts (4b) which are integrally formed, preferably from a plastic such as polyethylene, and the closure elements on the second longitudinal edge are fashioned as corresponding holes (18), and when the sleeve (1) is in the closed condition nuts (4a), preferably knurled nuts made of a plastic such as polyethylene, can be mounted on the threaded bolts (4b).

9. Longitudinally divided cable sleeve according to one of the preceding claims, characterised in that the supporting members (10) in the interior region of the cable sleeve (1) are constructed as independent annular components, preferably from a plastic such as polyethylene.

10. Longitudinally divided cable sleeve according to one of Claims 1 to 8, characterised in that the supporting members (10) are designed as shaped strips with cut-outs (10b), similar to the manner of the supporting strips (5), in the introduction regions (17) and are inserted on the inwardly facing side of the envelope (1a) and fixed, preferably at least region by region, to the envelope (1a).

11. Longitudinally divided cable sleeve according to one of the preceding claims, characterised in that a sealing strip (20), preferably of plastic material comprising preferably a bituminous sealing compound, is arranged in the longitudinal sealing regions (2) along the longitudinal edges.

12. Longitudinally divided cable sleeve according to one of the preceding claims, characterised in that support webs (3), preferably made of a plastic such as polyethylene, are arranged on the outer sides of the longitudinally extending sealing region (2), at least in the introduction regions (17).

13. Longitudinally divided cable sleeve according to one of the preceding claims, characterised in that the supporting members (5, 10) are manufactured from plastics profiles, preferably of polyethylene.

14. Longitudinally divided cable sleeve according to Claim 13, characterised in that the supporting members (10) are fashioned as supporting strips.

15. Longitudinally divided cable sleeve according to Claim 14, characterised in that the supporting members (10) are subdivided into individual segments (10a) by incisions (10b).

16. Longitudinally divided cable sleeve according to one of Claims 13 to 15, characterised in that the supporting members (5, 10) are inserted as separate components.

17. Longitudinally divided cable sleeve according to one of Claims 13 to 15, characterised in that the supporting members (5, 10) are joined to the envelope (1a) region by region.

18. Longitudinally divided cable sleeve according to one of Claims 13 to 15, characterised in that the supporting members (5, 10) are each Joined to the envelope (1a) over the entire length.

19. Intermediate material for producing a cable sleeve (1) with a flexible sheet as envelope according to one of the preceding claims, characterised in that the sheet (1a) is composed of:
a. a cover layer (11) of a polymeric plastic, preferably of polyethylene
b. an adhesion layer (12) below this, composed of a copolymer, preferably an ethylene-acrylate polymer
c. a reinforcing layer (13), preferably of glass fibres
d. a metal foil (14), preferably of steel, applied thereto and coated on both sides with a copolymer (12), preferably an ethylene-acrylate polymer.

20. Intermediate material for producing a cable sleeve (1) with a flexible sheet as envelope according to one of Claims 1 to 8, characterised in that the sheet (1b) is composed of:
a. a cover layer (11) of a polymeric plastic, preferably polyethylene
b. an adhesion layer (12) below this, composed of a copolymer, preferably an ethylene-acrylate polymer
c. a plastic film, preferably of polyethylene, which has a planar profile (15) with cavities, said cavities being filled with a plastic sealing material (16), preferably a bituminous sealing compound
d. a metal foil (14), preferably of steel, applied thereto and coated on both sides with a copolymer (12), preferably an ethylene-acrylate polymer.

21. Intermediate material according to one of Claims 1 to 18, characterised in that the sheet (1c) is composed of:
a. a cover film (11) of a polymer material, preferably polyethylene
b. a first metal foil (14a), preferably of steel, arranged below said cover film (11) and coated on both sides with a copolymer (12), preferably an ethylene-acrylate polymer
c. a reinforcing layer (13), preferably of glass fibres
d. a further, second metal foil (14b), preferably of steel, coated on both sides with a copolymer (12), preferably an ethylene-acrylate polymer.

22. Intermediate product for producing a cable sleeve (1) with a flexible sheet as envelope according to one of the preceding Claims 1 to 18, characterised in that the sheet (1d) is composed of:
a. a cover layer (11a) of a polymeric material, preferably polyethylene
b. an adhesion layer (12) below this, composed of a copolymer, preferably an ethylene-acrylate polymer
c. a reinforcing layer (13), preferably of glass fibres
d. a second adhesion layer (12) composed of a copolymer, preferably of an ethylene-acrylate polymer.
e. a further plastic layer (11b), preferably of polyethylene
f. a final metal foil (14), preferably of steel, coated on both sides with a copolymer (12), preferably of an ethylene-acrylate polymer.

23. Intermediate material according to one of Claims 19 to 22, characterised in that the reinforcing layer (13) is composed of longitudinally extending reinforcing elements, preferably glass fibres.

24. Intermediate product according to one of Claims 19 to 22, characterised in that the reinforcing layer (13) is composed of longitudinally and transversely extending reinforcing elements, preferably glass fibres, arranged in a lattice form.

25. Intermediate product according to one of Claims 19 to 22, characterised in that the reinforcing layer (13) is composed of a woven material, preferably of glass fibres.

26. Intermediate material according to one of Claims 19 to 22, characterised in that the individual layers of the sheet (1a, 1b, 1c, 1d) have in each case the following thicknesses:
| | |
|---|---|
| Cover layer (11) of plastic | ≦ 200 µm, preferably 150 µm |
| Copolymer layer (12) in each case | ≦ 50 µm, preferably 30 µm |
| Metal foils (14, 14a, 14b) | ≦ 200 µm, preferably 150 µm |
| Metal foils (14, 14a, 14b) | ≦ 200 µm, preferably 150 µm |
| Reinforcing layer (13) | ≦ 150 µm, preferably 120 µm |
| Layer as profile (15) with cavities | ≦ 300 µm, preferably 300 µm. |

## Revendications

1. Manchon (1) de câble fendu longitudinalement, constitué d'une gaine (1a) ayant une fermeture longitudinale et des parties d'étanchéité du côté frontal,
caractérisé
en ce qu'elle comporte, au moins dans certaines parties, des pièces d'appui (5,10), et en ce que la gaine (1a) à appliquer sur les pièces d'appui (5,10) est formée d'une feuille souple constituée de couches (11,11a,11b) de matière plastique, adhérant les unes aux autres et de couches (13) de renforcement, ainsi que d'au moins une feuille métallique (14,14a,14b).

2. Manchon de câble fendu longitudinalement suivant la revendication 1,
caractérisé
en ce que la gaine (1a) est constituée d'une pièce de forme plane, de symétrie par rapport à un axe (19) longitudinal.

3. Manchon de câble fendu longitudinalement suivant la revendication 1,
caractérisé
en ce que la gaine est découpée symétriquement par rapport à un axe (19) longitudinal, dans une feuille plane fabriquée au mètre.

4. Manchon de câble fendu longitudinalement suivant l'une des revendications précédentes,
caractérisé
en ce que la gaine (1a) comporte dans les parties d'entrée (17), du côté frontal, des logements (5-5) pour de la matière plastique (7) d'étanchéité constituée de préférence de mastic d'obturation en bitume.

5. Manchon de câble fendu longitudinalement suivant la revendication 4,
caractérisé
en ce que les logements (5-5) sont constitués d'au moins deux barrettes d'appui (5) s'étendant transversalement à la direction d'entrée, les barrettes d'appui (5) comportant des évidements (6) tels qu'il est possible de mettre la gaine (1a) sous la forme d'une partie d'entrée (17) tubulaire.

6. Manchon de câble fendu longitudinalement suivant l'une des revendications précédentes,
caractérisé
en ce que la matière d'étanchéité (7) introduite dans les logements (5-5) est plus épaisse que la hauteur des barrettes d'appui (5a).

7. Manchon de câble fendu longitudinalement suivant l'une des revendications précédentes,
caractérisé
en ce que des éléments de fermeture (4a,4b,12) sont prévus le long des bords (2) longitudinaux.

8. Manchon de câble fendu longitudinalement suivant la revendication 7,
caractérisé
en ce que les éléments de fermeture de l'un des bords longitudinaux sont constitués sous la forme d'axes filetés (4b), de préférence d'une seule pièce avec le bord, et de préférence en matière plastique, comme le polyéthylène, les éléments de fermeture du deuxième bord longitudinal sont constitués sous la forme de trous (18) conjugués, des écrous (4a), de préférence moletés, en matière plastique, comme en polyéthylène, pouvant être enfilés sur les axes filetés (4b) lorsque le manchon (1) est à l'état fermé.

9. Manchon de câble fendu longitudinalement suivant l'une des revendications précédentes,
caractérisé
en ce que les pièces d'appui (10) sont constituées à l'intérieur du manchon (1) de câble sous la forme d'éléments constitutifs annulaires autonomes, de préférence en matière plastique, comme en polyéthylène.

10. Manchon de câble fendu longitudinalement suivant l'une des revendications 1 à 8,
caractérisé
en ce que les pièces d'appui (10) sont constituées sous la forme de réglettes ayant des découpes (10b) de la même façon que les barrettes d'appui (5) dans les parties d'entrée (17) et sont insérées du côté de la gaine (1a) qui est tourné vers l'intérieur et sont fixées, de préférence, au moins par endroits à la gaine (1a).

11. Manchon de câble fendu longitudinalement suivant l'une des revendications précédentes,
caractérisé
en ce que, dans les parties d'étanchéité (2) du côté longitudinal, est montée, le long des bords longitudinaux, une bande d'étanchéité (20), de préférence en matière plastique constituée de préférence d'un mastic d'obturation en bitume.

12. Manchon de câble fendu longitudinalement suivant l'une des revendications précédentes,
caractérisé
en ce que du côté extérieur de la partie d'étanchéité (2) s'étendant longitudinalement, sont disposées, au moins dans les parties d'entrée (17), des réglettes d'appui (3), de préférence en matière plastique, comme le polyéthylène.

13. Manchon de câble fendu longitudinalement suivant l'une des revendications précédentes,
caractérisé
en ce que les pièces d'appui (5,10) sont fabriquées en profilés en matière plastique, de préférence en polyéthylène.

14. Manchon de câble fendu longitudinalement suivant la revendication 13,
caractérisé
en ce que les pièces d'appui (10) sont constituées en réglettes d'appui.

15. Manchon de câble fendu longitudinalement suivant la revendication 14,
caractérisé
en ce que les pièces d'appui (10) sont subdivisées par des entailles (10b) en segments (10a).

16. Manchon de câble fendu longitudinalement suivant l'une des revendications 13 à 15,
caractérisé
en ce que les pièces d'appui sont insérées sous la forme d'éléments constitutifs distincts.

17. Manchon de câble fendu longitudinalement suivant l'une des revendications 13 à 15,
caractérisé
en ce que les pièces d'appui (5,10) sont reliées par endroits à la gaine (1a).

18. Manchon de câble fendu longitudinalement suivant l'une des revendications 13 à 15,
caractérisé
en ce que les pièces d'appui (5,10) sont reliées sur toute la longueur à la gaine (1a).

19. Semi-produit pour la fabrication d'un manchon (1) de câble ayant une feuille souple comme gaine suivant l'une des revendications précédentes,
caractérisé
en ce que la feuille (1a) est constituée :
a. d'une couche de finition (11) en matière plastique polymère, de préférence en polyéthylène
b. d'une couche d'adhérence (12) sous-jacente en un copolymère, de préférence en un poly(acrylate d'éthylène)
c. d'une couche de renforcement (13), de préférence en fibres de verre
d. d'une feuille métallique (14), de préférence en acier, déposée dessus et revêtue sur les deux faces d'un copolymère (12), de préférence d'un poly(acrylate d'éthylène).

20. Semi-produit pour la fabrication d'un manchon (1) de câble ayant une feuille souple comme gaine suivant l'une des revendications 1 à 8,
caractérisé
en ce que la feuille (1b) est constituée
a. d'une couche de finition (11) en matière plastique polymère, de préférence en polyéthylène
b. d'une couche d'adhérence (12) sous-jacente en un copolymère, de préférence en un poly(acrylate d'éthylène)
c. d'une feuille de matière plastique de préférence en polyéthylène, qui présente un profil (15) plan à chambres, les chambres étant emplies d'une matière plastique d'étanchéité (16), de préférence d'un mastic d'obturation en bitume
d. d'une feuille métallique (14), de préférence en acier, déposée dessus et revêtue sur les deux faces d'un copolymère (12), de préférence d'un poly(acrylate d'éthylène).

21. Semi-produit suivant l'une des revendications 1 à 18,
caractérisé
en ce que la feuille (1c) est constituée
a. d'une couche de finition (11) en matière plastique polymère, de préférence en polyéthylène
b. d'une couche d'adhérence (12) sous-jacente en un copolymère, de préférence en un poly(acrylate d'éthylène)
c. d'une couche de renforcement (13), de préférence en fibres de verre
d. d'une seconde feuille métallique (14b), de préférence en acier, revêtue sur les deux faces d'un copolymère, de préférence d'un poly(acrylate d'éthylène).

22. Semi-produit pour la fabrication d'un manchon (1) de câble ayant une feuille souple comme gaine suivant l'une des revendications précédentes 1 à 18,
caractérisé
en ce que la feuille (1d) est constituée
a. d'une couche de finition (11a) en une matière plastique polymère, de préférence en polyéthylène,
b. d'une couche d'adhérence (12) sous-jacente en un copolymère, de préférence en un poly(acrylate d'éthylène)
c. d'une couche de renforcement (13), de préférence en fibres de verre
d. d'une seconde couche d'adhérence (12) en un copolymère, de préférence en poly(acrylate d'éthylène)
e. d'une autre couche de matière plastique (11b), de préférence en polyéthylène
f. d'une feuille métallique (14), de préférence en acier, de fermeture revêtue sur les deux faces d'un copolymère, de préférence en polyacrylate d'éthylène.

23. Semi-produit suivant l'une des revendications 19 à 22,
caractérisé
en ce que la couche de renforcement (13) est constituée d'éléments de renforcement longitudinaux, de préférence de fibres de verre.

24. Semi-produit suivant l'une des revendications 19 à 22,
caractérisé
en ce que la couche de renforcement (13) est constituée d'éléments de renforcement de préférence de fibres de verre s'étendant longitudinalement et transversalement en forme de quadrillage.

25. Semi-produit suivant l'une des revendications 19 à 22,
caractérisé
en ce que la couche de renforcement (13) est en un tissu, de préférence en fibres de verre.

26. Semi-produit suivant l'une des revendications 19 à 22,
caractérisé
en ce que les couches des feuilles (1a,1b,1c,1d) ont respectivement les épaisseurs suivantes :
| | |
|---|---|
| couche de finition (11) en matière plastique | ≦ 200 µm, de préférence 150 µm |
| couche de copolymère (12) respectivement | ≦ 50 µm, de préférence 30 µm |
| feuille métallique (14,14a,14b) | ≦ 200 µm, de préférence 150 µm |
| couche de renforcement (13) | ≦ 150 µm, de préférence 20 µm |
| couche servant de profilé (15) à chambres | ≦ 300 µm, de préférence 300 µm. |
